# EUROPÄISCHE PATENTSCHRIFT

(11) **EP 4 071 776 B1**
(45) Veröffentlichungstag und Bekanntmachung des Hinweises auf die Patenterteilung: **26.03.2025**
(21) Anmeldenummer: 21167324.9
(22) Anmeldetag: 08.04.2021
(51) Int. Cl.: H01F 41/16, H02K 15/02

(54) **VERFAHREN ZUR BEREITSTELLUNG EINER DRUCKSCHABLONE**
METHOD FOR PROVIDING A PRINTING SCREEN
PROCÉDÉ DE PRÉPARATION D'UN GABARIT D'IMPRESSION

(43) Veröffentlichungstag der Anmeldung: 12.10.2022
(73) Patentinhaber: Siemens Aktiengesellschaft, 80333 München (DE)
(72) Erfinder: Schuh, Carsten, 85598 Baldham (DE)
(74) Vertreter: Siemens Patent Attorneys

(56) Entgegenhaltungen:
- EP-A1- 3 562 006
- DE-A1- 102007 059 794
- DE-A1- 102011 081 837
- DE-A1- 2 128 729
- DE-A1- 4 411 750
- US-A1- 2011 094 398

## Beschreibung

Die Erfindung betrifft ein Verfahren zur Bereitstellung einer Druckschablone nach Patentanspruch 1.

Ein neues Verfahren zur Herstellung von Magnetblechen für E-Maschinen stellt der Schablonendruck, eine Unterart des Siebdruckes, dar. Hierbei wird, ausgehend von Metallpulvern, zunächst eine Druckpaste erzeugt, diese dann mittels einer Schablonendrucktechnik zu einem Grünkörper in Form einer Dickschicht verarbeitet und anschließend der entstandene Grünkörper durch thermische Behandlung zum einen einer Entbinderung und zum anderen einem Sinterprozess zu Umwandlung in ein metallisches strukturiertes Blech überführt.

Prinzipbedingt zeichnen sich mittels eines solchen Verfahrens hergestellte Magnetbleche durch eine erhöhte Dickentoleranz im Vergleich zu Blechen aus, die durch eine Walztechnik hergestellt und anschließend ausgestanzt sind. Dies führt insbesondere zu Dickenschwankungen innerhalb eines Bleches, die sich beispielsweise in einer Keilform oder in einer schüsselförmigen, konkaven Vertiefung über die Blechfläche äußern. Dies wiederum führt in einem Blechpaket, das einen Rotor oder einen Stator der E-Maschine darstellt, zu einem nicht ganz optimalen Füllgrad an magnetisch aktivem Material.

Zur Vergleichmäßigung der Schichtdicke der gedruckten Schicht und somit des daraus resultierenden Magnetbleches gibt es verschiedene Parameter, die optimiert werden können. Zum einen kann die Zusammensetzung des Druckmediums, also der Druckpaste, verändert werden, zum anderen können die Prozessbedingungen wie beispielsweise die Rakelgeschwindigkeit bzw. der Anpressdruck des Rakels angepasst werden. All diese Veränderungsmöglichkeiten lassen jedoch immer noch weitere Optimierungsschritte zu.

Als Stand der Technik sei die US 2011094398 A1 genannt, die ein Verfahren zur Herstellung einer Druckschablone beschreibt.

Der Erfindung liegt die Aufgabe zugrunde, ein Verfahren zur Bereitstellung einer Druckschablone zu generieren, die dafür geeignet sind, die Dickenunterschiede in der gedruckten Dickschicht zu reduzieren.

Die Lösung der Aufgabe besteht in einem Verfahren zur Bereitstellung einer Druckschablone mit den Merkmalen des Patentanspruches 1.

Die Druckschablone nach Patentanspruch 1 für eine Schablonendruckvorrichtung weist dabei offene Bereiche zum Durchlass eines Druckmediums, insbesondere einer Druckpaste, auf, sowie Abdeckungsbereiche zur Verhinderung des Durchlasses des Druckmediums. Dabei umfasst die Druckschablone mindestens zwei Verbindungsstege zwischen mindestens zwei Abdeckungsbereichen. Die Erfindung zeichnet sich dadurch aus, dass zwei benachbarte Verbindungsstege eine um mindestens 5 % unterschiedliche mittlere Breite aufweisen.

Es hat sich erfindungsgemäß herausgestellt, dass die gegebenen Prozessparameter, insbesondere die Rakelgeschwindigkeit und der Rakelanpressdruck, jedoch auch die Pastenverfügbarkeit trotz Prozessoptimierung über die zu bedruckende Fläche einer kontinuierlichen Veränderung unterzogen sind. Die mittlere Breite der Verbindungsstege, die linear mit der Stegfläche korreliert, ist dabei erfindungsgemäß zwischen jeweils zwei benachbarten Verbindungsstegen um ein geringes Maß kontinuierlich anzupassen, sodass die Schichtdicke bei den gegebenen Prozessparametern konstant bleibt bzw. konstant wird. Es hat sich herausgestellt, dass die Änderung der mittleren Breite zwischen zwei Verbindungsstegen mindestens 5 % betragen sollte, um die Dicke der zu druckenden Schicht über deren flächigen Erstreckung möglichst konstant zu halten.

Dabei versteht man unter der mittleren Breite der Verbindungsstege einen Mittelwert einer Vielzahl - im Idealfall infinitesimal vielen - Breitenmessungen senkrecht zu einem Verlauf einer Längsachse des Verbindungssteges. Die mittlere Breite der Verbindungsstege korreliert dabei bei einer angenommenen gleichen Länge der Verbindungsstege mit der Stegfläche. Dabei versteht man unter der Stegfläche die Fläche, die bei einer senkrechten Betrachtung auf die Schablone zu erkennen ist.

Als besonders vorteilhaft hat sich herausgestellt, dass bezüglich der Druckschablone in ihrer bestimmungsgemäßen Einbaulage ein Rakellaufweg definiert ist und bezüglich des Rakellaufweges ein Rakelstartbereich und ein diesem gegenüberliegender Rakelwendebereich definiert ist. Der Rakelstartbereich und der Rakelwendebereich machen dabei jeweils im Wesentlichen ca. 25 % des Rakellaufweges aus. Ferner liegt ein zwischen diesen beiden Bereichen angeordneter Mittelbereich vor, wobei die Verbindungsstege im Mittelbereich in ihrer mittleren Breite um mindestens 5 % schmaler sind als die Verbindungsstege im Wendebereich oder im Startbereich.

Es hat sich herausgestellt, dass insbesondere in dem beschriebenen Mittelbereich die Schichtdicken der gedruckten Schicht bezüglich der Schichtdicken im Startbereich und im Wendebereich geringer ausfallen. Durch eine Wahl von schmaleren Verbindungsstegen im Mittelbereich erhöht sich die Fläche der offenen Bereiche, also der Bereiche, an denen ein Druckmedium auf das zu bedruckende Substrat gepresst wird. Dadurch erhöht sich auch die absolute Menge des Druckmediums in diesem Bereich, was wiederum zu einer höheren Schichtdicke führt. Somit wird die Schichtdicke, die bei herkömmlichen Druckschablonen nach dem Stand der Technik in dem Mittelbereich geringer ist als im Wendebereich und im Startbereich, durch die beschriebene Maßnahme erhöht. Sie wird somit der höheren Dicke in dem Wendebereich und dem Startbereich angepasst. Im Gegenzug sinkt die absolute Dickenabweichung über die gesamte gedruckte Schicht.

Unter der absoluten Dickenabweichung wird der Quotient der Differenz zwischen dem höchsten und dem niedrigsten gemessenen Wert der Dicke bezogen auf den höchsten gemessenen Wert verstanden. Beträgt die höchste gemessene Dicke der Schicht beispielsweise 100 µm und die geringste gemessene Schichtdicke beträgt 80 µm, dann beträgt die absolute Dickenabweichung von der maximalen (höchsten) gemessenen Dicke 20 %.

Zur Erzielung der beschriebenen vorteilhaften Druckschablone ist es zweckmäßig, dass die Verbindungsstege entlang ihres Verlaufes zumindest teilweise keilförmig ausgestaltet sind. Auf diese Weise können auch Dickenunterschiede in der Schicht von einem Zentrum nach außen ausgeglichen werden. Dabei kann es auch zweckmäßig sein, wenn die Verbindungsstege entlang ihres Verlaufes gegenläufig keilförmig ausgestaltet sind.

In einer weiteren bevorzugten Ausgestaltungsform der Erfindung ist ein Druckbild der Druckschablone im Wesentlichen rotationssymmetrisch, mit radial nach außen ragenden Verbindungsstegen ausgestaltet. Dabei wird zunächst eine erste Achse entlang des Rakellaufweges definiert und es wird eine zweite, zu der ersten Achse senkrecht stehende Achse definiert. Dabei ist die erste Achse mit einem Winkel von 0° festgelegt, und eine zweite Achse weist demnach den Winkel 90° auf. Die Druckschablone weist in dieser rotationssymmetrischen Ausgestaltung dabei die Besonderheit auf, dass die mittlere Breite der Verbindungsstege von 0° bis 90° zunimmt, insbesondere kontinuierlich abnimmt. Dies ist deshalb vorteilhaft, da sich bei der rotationssymmetrischen Ausgestaltung des Druckbildes der mittlere Bereich insbesondere bei dem beschriebenen 90°-Winkel zur Rakellaufwegsachse befindet.

Die Erfindung beschreibt ein Verfahren zur Bereitstellung einer Druckschablone mit verschiedenen Flächeneinheiten, nämlich offenen Bereichen zum Durchlass eines Druckmediums sowie Abdeckungsbereichen zur Verhinderung des Durchlasses des Druckmediums, wobei die Abdeckungsbereiche durch mindestens zwei Verbindungsstege verbunden sind, die in einer senkrechen Projektion eine Fläche aufweisen. Das Verfahren umfasst dabei die folgenden Schritte:
a) Einsetzen einer Basisdruckschablone in eine Schablonendruckvorrichtung,
b) Bewegen eines Rakels entlang eines Rakellaufweges von einem Rakelstartbereich zu einem diesem gegenüberliegenden Rakelwendebereich,
c) mit gleichzeitigem Aufdrucken eines Druckmediums durch die offenen Bereiche auf ein Substrat in Form einer gedruckten Schicht,
d) Vermessen der resultierenden Dicke 38 der gedruckten Schicht an mehreren Messpunkten,
e) Bestimmung einer Zielflächengröße der Verbindungsstege, die eine geringere absolute Dickenabweichung der Schicht bewirkt,
f) Veränderung der Fläche der Verbindungsstege auf Basis der bestimmten Zielflächengröße,
g) Wiederholung der Schritte a) bis d).

Das erfindungsgemäße Verfahren weist im Wesentlichen dieselben Vorteile auf, die bereits bezüglich der Druckschablone beschrieben sind. Es handelt sich dabei insbesondere um ein iteratives Verfahren, wobei insbesondere zur Veränderung der Fläche die mittlere Stegbreite verändert wird. Dieses iterative Verfahren kann bei einer optimalen Durchführung nach dem ersten Durchgang gestoppt werden. Sollte die Dickenabweichung weiterhin in einem nicht ausreichenden Maße groß sein, können die Schritte a) bis d) und die Schritte e) bis f) ggf. mehrfach wiederholt werden, bevorzugt bis eine absolute Dickenabweichung der Schicht weniger als 15 %, besonders bevorzugt weniger als 10 % beträgt.

Die Zielflächengröße ist dabei die Fläche eines jeden Verbindungssteges, die benötigt wird, damit die Dicke der Schicht an einer dem Steg benachbarten Position eine geringere absolute Dickenabweichung aufweist als die zuvor gemessene Dickenabweichung. Die Zielflächengröße kann dabei mittels eines mathematischen Algorithmus oder durch Abrufen hinterlegter empirischer Daten ermittelt werden.

Besonders bevorzugt erfolgt die Veränderung der Fläche der Verbindungsstege mittels eines mechanischen Bearbeitungsverfahrens, beispielsweise eines Fräsverfahrens, eines Laserschneidverfahrens oder eines Wasserstrahlschneidverfahrens.

In einer weiteren Ausgestaltungsform der Erfindung wird die Fläche der Verbindungsstege verkleinert, wenn die Dicke der Schicht zwischen zwei Verbindungsstegen geringer ist als die höchste gemessene Dicke der Schicht. Wie bereits erwähnt, wird bei einer kleineren Fläche der Verbindungsstege der benachbarte offene Bereich mit einer höheren Menge an Druckmedium bzw. Druckpaste bedient, weshalb dort die Schichtdicke der gedruckten Schicht steigt. Ferner ist es prozesstechnisch leichter, die Fläche der Verbindungsstege zu verkleinern, als diese zu vergrößern. Hierzu müsste eine neue Schablone hergestellt werden. Bei einer vorteilhaften Verkleinerung der Verbindungsstege kann dies an einer bestehenden Schablone gemäß dem beschriebenen Verfahren in einfacher Weise vorgenommen werden.

Weitere Ausgestaltungsformen und weitere Merkmale der Erfindung werden anhand der folgenden Figuren näher erläutert. Dabei handelt es sich um rein schematische, stark vereinfacht dargestellte Ausgestaltungen, die keine Einschränkung des Schutzbereiches darstellen. Merkmale mit derselben Bezeichnung werde auch bei unterschiedlichen Ausgestaltungsformen mit demselben Bezugszeichen versehen.

Dabei zeigen:
- Figur 1: ein typisches Druckbild eines Magnetbleches oder auch einer gedruckten Schicht, das jedoch stark vereinfacht ohne sonst übliche Konturen dargestellt ist,
- Figur 2: eine Schablonendruckvorrichtung im Querschnitt,
- Figur 3: eine grafische Darstellung von Dickenmessungen bezogen auf das Druckbild in Figur 1,
- Figur 4: eine Druckschablone nach dem Stand der Technik,
- Figur 5: ein typisches Magnetblech mit einem Druckbild, das in einem Rotor einer E-Maschine einsetzbar ist,
- Figur 6: eine Druckschablone, die gegenüber dem Stand der Technik modifiziert ist,
- Figur 7: eine weitere modifizierte Druckschablone und
- Figur 8: einen vergrößerten Ausschnitt des gestrichelten Bereiches VIII aus Figur 7.

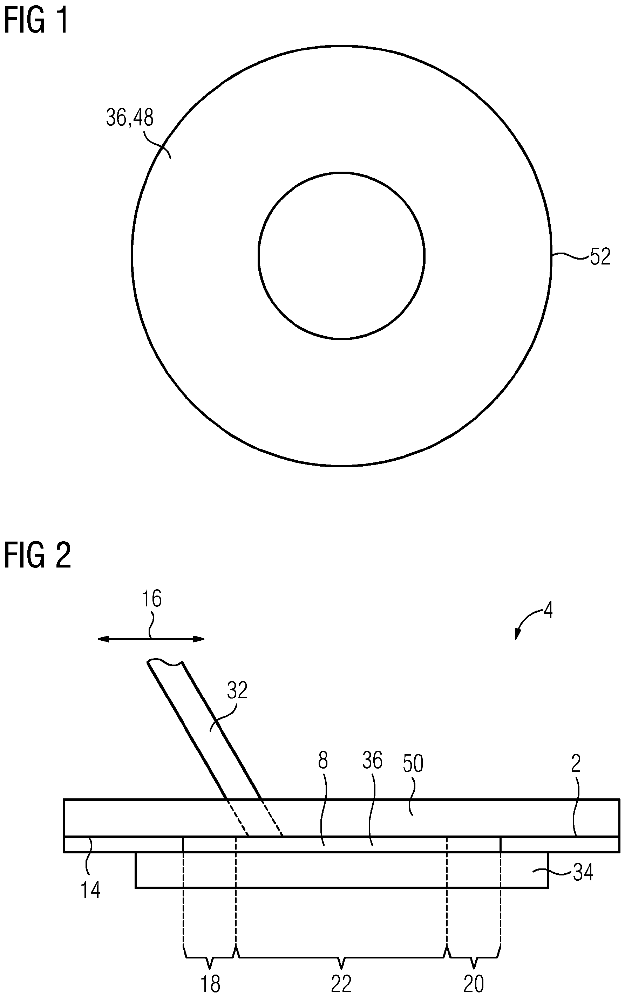

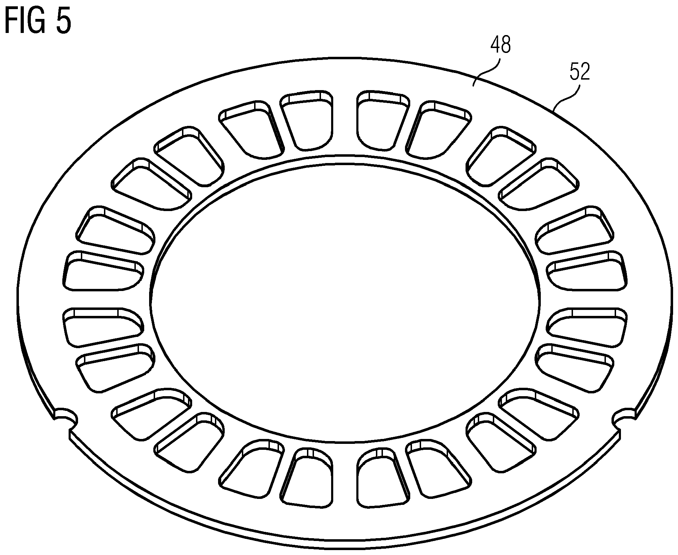

In Figur 1 ist sehr schematisch ein Druckbild 52 einer Druckschablone 2 angegeben, das eine gedruckte Schicht 36 oder ein daraus gesintertes Magnetblech 48 darstellen kann. Es handelt sich dabei um ein rotationssymmetrisches Objekt, das ringförmig ausgestaltet ist. Das im Weiteren Beschriebene lässt sich auch auf andere, beispielsweise quadratische Strukturen anwenden. Bei dieser ringförmigen Ausgestaltung gemäß Figur 1 handelt es sich um eine stark vereinfachte Form, die dazu dient, die weiteren Herstellungsprozesse zu erläutern. Als Beispiel für ein reales Magnetblech 48 mit einem entsprechenden Druckbild 52 ist die Darstellung in Figur 5 gegeben. Ein derartiges Magnetblech 48 wird zu einem hier nicht dargestellten Stapel zusammengestapelt und bildet somit den magnetischen Kern eines Rotors einer elektrischen Maschine. Die in Figur 5 in dem Magnetblech zu erkennenden Ausnehmungen dienen im Magnetblechstapel als Kanäle zum Verlegen elektrischer Leiter in Form von Wicklungen.

Zur Herstellung eines Magnetbleches 48 bzw. dessen Vorläufer, einer gedruckten Schicht 36, kommt eine Schablonendruckvorrichtung 4 mit einer Druckschablone 2 zum Einsatz. Dies ist in Figur 2 schematisch dargestellt. Die Druckschablone 2 ist dabei in einem Rahmen 50 befestigt und es wird mittels eines Rakels 32 entlang eines Rakellaufwegs 16 ein Druckmedium 8, in Form einer Druckpaste 8, auf ein Substrat 34 gedruckt. Hierbei entsteht eine gedruckte Schicht 36.

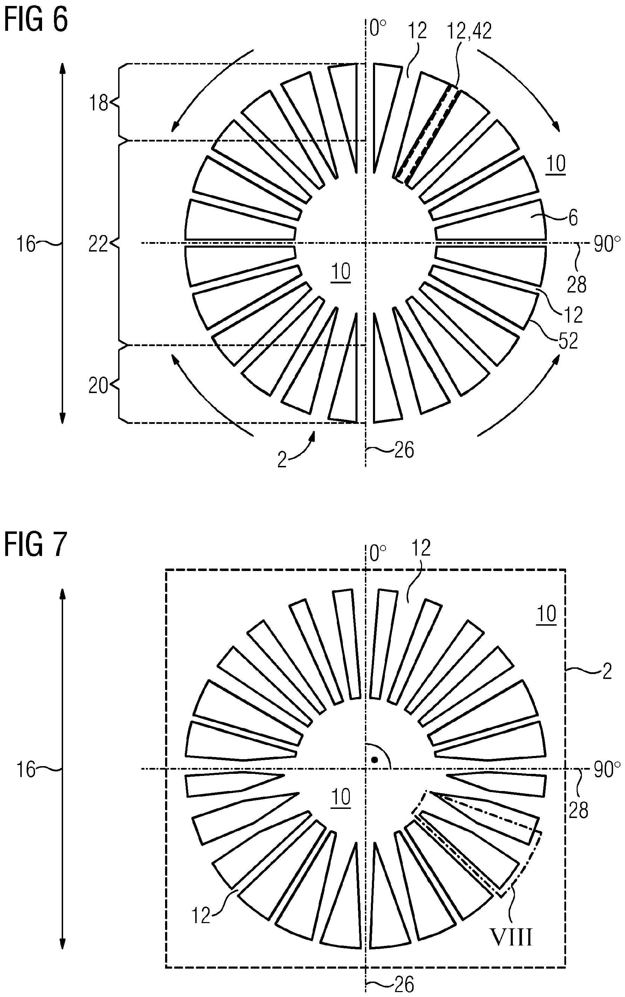

Der Rakellaufweg 16 unterteilt sich dabei in drei Teile: zum einen in den Rakelstartbereich 18, in einen mittleren Bereich 22 sowie in einen Rakelwendebereich 20. Dabei machen der Rakelstartbereich 18 und der Rakelwendebereich 20 jeweils in etwa 25 % des gesamten Rakelweges 16 aus. Der Mittelbereich 22 entspricht demnach in etwa 50 % des Rakelweges 16. Diese Abschnitte 18, 20 und 22 sind dabei hilfsweise Definitionen, um die Beschaffenheit der Druckschablone gemäß der Figuren 6 und 7 genauer zu beschreiben.

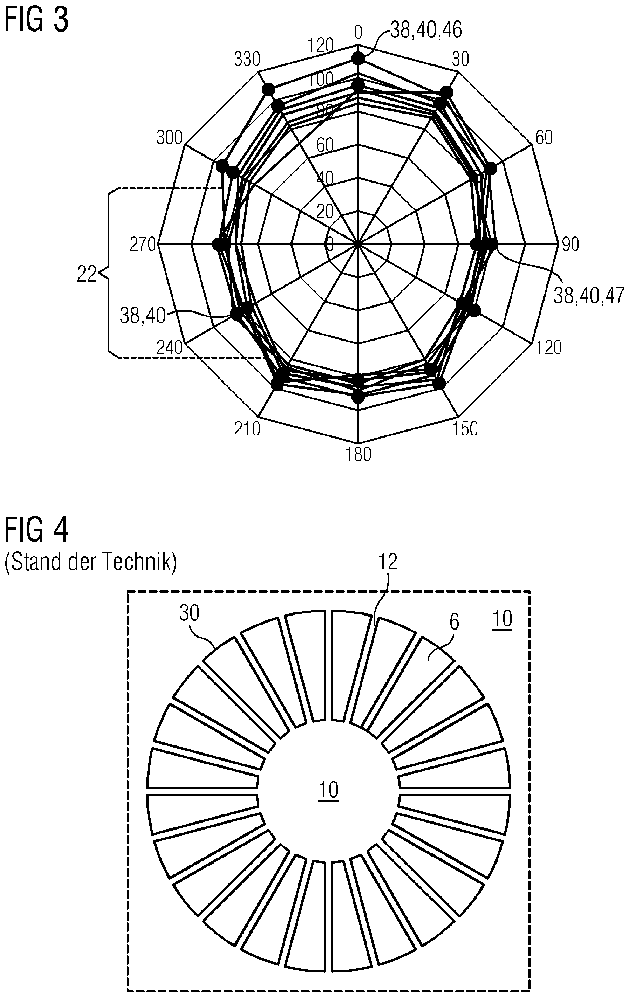

In Figur 3 ist eine spinnennetzförmige Darstellung einer jeweiligen Dicke 38 der gedruckten Schicht 36 an einer Vielzahl von Messpunkten 40 gegeben. Dabei wird die Dicke 38 rotationssymmetrisch bezogen auf ein Druckbild 52 der gedruckten Schicht 36 gemäß Figur 1 in das Diagramm eingetragen. Dabei entspricht der Winkel im rotationssymmetrischen Verlauf des jeweiligen Messpunktes 40 seiner Anordnung im Druckbild 52 gemäß Figur 1 analog. Die Position des Messpunktes 40 in radialer Richtung wiederum stellt die gemessene Schichtdicke dar. Die Messung erfolgt dabei jeweils an einer definierten Stelle mit einem gleichbleibenden Radius um einen Mittelpunkt des rotationssymmetrischen Druckbildes 52. Die einzelnen mit Linien verbundenen Punktketten stellen jeweils unterschiedliche Messungen an unterschiedlichen gedruckten Schichten 36 dar. Würde es sich bei jeder gedruckten Schicht 36 um eine gleichmäßige Verteilung der Schichtdicke 38 handeln, so wäre das Bild nach Figur 3 ebenfalls im Wesentlichen kreisförmig. Jedoch ist das Bild gemäß Figur 3 für alle gemessenen gedruckten Schichten 36 in eine axiale Richtung gestaucht, sodass eine annähernd ellipsenförmige Form entsteht. Dabei weist jede Messreihe mindestens eine höchste gemessene Schichtdicke 46 auf. Alle anderen Messpunkte 40 der jeweiligen Messkette sind dementsprechend niedriger.

Das Bild der einzelnen Schichtdicken gemäß Figur 3 ergibt sich bei der Verwendung einer Schablone 30 nach dem Stand der Technik. Bei dieser Schablone handelt es sich um eine Basisdruckschablone, von der ausgehend Druckschablonen 2, die in den Figuren 6 und 7 dargestellt sind, erzeugt werden. Die Basisdruckschablone 30 gemäß Figur 4 zeichnet sich insbesondere dadurch aus, dass sie offene Bereiche 6 aufweist, die im späteren Druckbild 52 die Druckpaste 8 umfassen. Die dazwischen angeordneten Verbindungsstege 12 dienen dazu, Abdeckungsbereiche 10, die im späteren Druckbild 52 eben nicht von der Druckpaste bedeckt sein sollen, abzudecken. Da es sich bei den Abdeckungsbereichen 10 um auseinanderliegende Bereiche handelt, sind diese in der Basisdruckschablone über diese Verbindungsstege 12 miteinander verbunden. Die Verbindungsstege 12 sind dabei bevorzugt im Verhältnis zu den offenen Bereichen 6 dünn ausgestaltet, sie sind gerade so breit, dass die Abdeckungsbereiche 10 mechanisch sicher miteinander verbunden sind. In den Bereichen der Verbindungsstege 12 wird somit auf das darunterliegende Substrat 34 keine Druckpaste 8 gedruckt. Nach dem Entfernen der Schablone erfolgt jedoch aufgrund der rheologischen Eigenschaften der Druckpaste 8 ein Einfließen dieser Druckpaste in die Bereiche, die vormals durch die Verbindungsstege 12 abgedeckt waren. Somit entsteht das Druckbild 52 gemäß Figur 1, in dem die Verbindungsstege 12 der Druckschablone 30 nicht mehr zu erkennen sind.

Aufgrund produktionstechnischer Gegebenheiten, wie beispielsweise die Geschwindigkeit des Rakels 32 entlang des Rakellaufweges 16 und dessen Anpressdruck auf die Schablone 30 und die Druckpaste 8 ergibt sich das inhomogene Verteilungsbild der Dicke 38 der Schicht 36 an verschiedenen Messpunkten 40 gemäß Figur 3.

Zur Vermeidung dieses inhomogenen Verteilungsbildes gemäß Figur 3 wird, ausgehend von der Basisdruckschablone 30, eine Druckschablone 2 erstellt, deren Verbindungsstege 12 unterschiedliche mittlere Breiten 44 aufweisen. Die mittleren Breiten 44 zweier benachbarter Verbindungsstege 12 der Druckschablone 2 an beliebigen Orten der Druckschablone 2 unterscheiden sich dabei um mindestens 5 %.

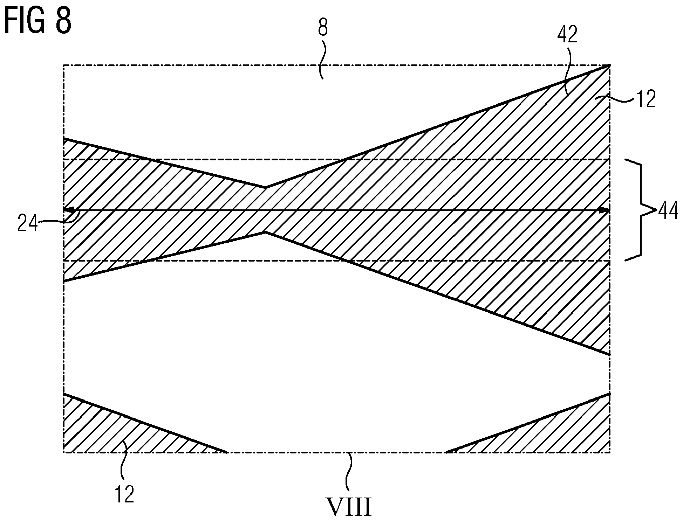

Dabei ist die mittlere Breite 44 der Verbindungsstege 12 in Figur 8 veranschaulicht. Figur 8 zeigt den Ausschnitt VIII in Figur 7 als Vergrößerung und ist ebenfalls eine exemplarische Darstellung möglicher Ausgestaltungen eines Verbindungssteges 12. Der Steg 12 in Figur 8 bzw. in Figur 7 VIII weist dabei eine doppelte konische Ausformung entlang des Verlaufes 24 des Verbindungssteges 12 auf. Die geringste Breite hat der Steg 12 gemäß Figur 8 in der Mitte seines Verlaufes 24 und weitet sich zu den äußeren Enden, also in Richtung der Abdeckungsbereiche 10 hin, aus. Der Steg 12 weist somit keine konstante Breite auf. Errechnet man jedoch seine mittlere Breite 44, die durch die gestrichelten Linien in Figur 8 eingezeichnet ist, so ist diese mittlere Breite 44 um mindestens 5 % verschieden von der mittleren Breite 44 des benachbarten Verbindungssteges. Ferner ist in Figur 8 der Verlauf 24 des Stegs 12 angegeben, der seiner Länge entspricht. Somit ergibt das Produkt der mittleren Breite 44 und des Verlaufs 24 die Fläche 42 des Stegs 12.

Bezüglich der Druckschablone 2 gemäß Figur 6 ist neben dem Rakellaufweg 16 in dessen Richtung eine erste Achse 26 definiert, die rechtwinklig durch eine zweite Achse 28 bevorzugt im Mittelpunkt des ringförmigen Druckbildes 52 geschnitten wird. Die beiden Achsen 26 und 28 beschreiben dabei einen 90°-Winkel, wobei die mittlere Breite 44 der Verbindungsstege 12 von 0°, also parallel zur ersten Achse 26, bis zu 90° kontinuierlich abnimmt. Dies ist deshalb zweckmäßig, da sich herausgestellt hat, dass, wie in Figur 3 ersichtlich ist, die Dicke 38 der gedruckten Schicht 36 in der Nähe der 90°-Linie kontinuierlich geringer wird. Durch die Verringerung einer Fläche 42 des Verbindungssteges 12, die sich bei konstanter Länge in linearer Korrelation zu der mittleren Breite 44 ergibt, wird mehr Druckpaste in die offenen Bereiche 6 gepresst, sodass sich durch die in Figur 6 beschriebene Maßnahme die Dicke 38 in dem genannten Bereich erhöht. Dabei ist anzumerken, dass die Fläche 42 der Verbindungsstege 12, wie sie in Figur 6 dargestellt ist, zur besseren Veranschaulichung erheblich übertrieben dargestellt ist.

In Figur 7 trifft diese Veränderung der Fläche 42 bzw. der mittleren Breite 44 der Verbindungsstege 12 bezogen auf das gleiche Koordinatensystem ebenfalls zu. Lediglich die bereits gemäß Figur 8 beschriebene doppelte Keilform oder auch die einfache Keilform der Verbindungsstege 12 ist in Figur 7 prägnanter ausgeprägt als in Figur 6. Durch die Keilform der Verbindungsstege 12 kann auch eine Dickenabweichung entlang des Radius nach gewünschter Vorgabe eingestellt werden.

Zur Herstellung einer Druckschablone 2 gemäß den Figuren 6 und 7 wird bevorzugt von der Basisdruckschablone 30 ausgegangen. Diese wird gemäß Figur 2 in eine Schablonendruckvorrichtung 4 wie beschrieben eingesetzt und der Druckvorgang wird durchgeführt. Es ergibt sich daraus, wie in Figur 1 beschrieben, ein entsprechendes Druckbild 52 und die in Figur 3 dargestellte Dickenverteilung. Hierzu werden eine Vielzahl von Messpunkten 40 aufgenommen, wobei die höchste Schichtdicke 46 bestimmt wird. Analog wird eine niedrigste gemessene Schichtdicke 47 ermittelt und die Differenz daraus in Bezug zur höchsten gemessenen Schichtdicke gestellt. In Figur 3 weist die höchste Schichtdicke 46 ungefähr 110 µm auf, die niedrigste gemessene Schichtdicke 47 weist jedoch nur ungefähr 70 µm auf. Die Differenz beträgt also 40 µm. Diese Differenz ist für ein späteres Magnetblech 48 unvorteilhaft hoch. Sie beträgt in etwa 36 % der höchsten gemessenen Schichtdicke 46. Dies wird als die absolute Dickenabweichung bezeichnet.

Um die absolute Dickenabweichung zu minimieren, wird die Basisdruckschablone 30 entsprechend der Figuren 6 und 7 modifiziert. Dabei wird bevorzugt durch ein mechanisches Verfahren die Stegfläche 42 im mittleren Bereich 22 kontinuierlich verringert, wobei die Verringerung auf eine Zielflächengröße erfolgt. Die Zielflächengröße wiederum wird entweder mittels eines entsprechenden mathematischen Algorithmus oder durch die Verwendung einer empirischen Datenbank ermittelt. Ist die Zielflächengröße der Verbindungsstege 12 erreicht, so wird die modifizierte Basisschablone 30, nun als Druckschablone 2 bezeichnet, erneut in die Schablonendruckvorrichtung 4 eingebaut und der Druckvorgang wird wiederholt. Es folgt eine weitere Dickenmessung analog der in Figur 3 dargestellten, und es wird überprüft, ob die Modifikation an der Druckschablone 2 die gewünschte Wirkung gezeigt hat. Sollte die absolute Dickenabweichung der Schicht weiterhin zu hoch sein, insbesondere mehr als 15 % betragen, so werden die beschriebenen Optimierungsschritte der Druckschablone 2 wiederholt, bis dieser bevorzugte maximale Dickenabweichungswert bei einem erneuten Druckvorgang erreicht wird. Besonders bevorzugt sollte die absolute Dickenabweichung weniger als 10 % betragen.

Bei der Berechnung der Zielflächengröße der Verbindungsstege 12 ist es ebenfalls zweckmäßig, die Parameter Rakelgeschwindigkeit entlang des Rakellaufweges 16 sowie den Anpressdruck des Rakels 32 auf das Substrat 34 mit zu berücksichtigen.

### Bezugszeichenliste

- 2: Druckschablone
- 4: Schablonendruckvorrichtung
- 6: offene Bereiche
- 8: Druckmedium
- 10: Abdeckungsbereiche
- 12: Verbindungsstege
- 14: Einbaulage
- 16: Rakellaufweg
- 18: Rakelstartbereich
- 20: Rakelwendebereich
- 22: Mittelbereich
- 24: Stegeverlauf
- 26: erste Achse
- 28: zweite Achse
- 30: Basisdruckschablone
- 32: Rakel
- 34: Substrat
- 36: gedruckte Schicht
- 38: Dicke
- 40: Messpunkte
- 42: Flächenstege
- 44: mittlere Stegbreite
- 46: höchste gemessene Schichtdicke
- 47: niedrigste gemessene Schichtdicke
- 48: Magnetblech
- 50: Rahmenschablone
- 52: Druckbild

## Patentansprüche

1. Verfahren zur Bereitstellung einer Druckschablone (2) mit verschiedenartigen Flächeneinheiten, nämlich offenen Bereichen (6) zum Durchlass eines Druckmediums (8) sowie Abdeckungsbereiche (10) zur Verhinderung des Durchlasses des Druckmediums (8), wobei die Abdeckungsbereiche (10) durch mindestens zwei Verbindungsstege (12) verbunden sind, die in einer senkrechten Projektion eine Fläche (42) aufweisen, umfassend folgende Schritte:
a) Einsetzen einer Basisdruckschablone (30) in eine Schablonendruckvorrichtung (4),
b) Bewegen eines Rakels (32) entlang eines Rakellaufwegs (16) von einem Rakel-Startbereich (18) zu einem diesem gegenüber liegenden Rakel-Wendebereich (20),
c) mit gleichzeitigem Aufdrucken eines Druckmediums (8) durch die offenen Bereiche (6) auf ein Substrat (34) in Form einer gedruckten Schicht (36), **gekennzeichnet durch**
d) Vermessen der resultierenden Dicke (38) der gedruckten Schicht (36) an mehreren Messpunkten (40),
e) Bestimmung einer Zielflächengröße der Verbindungsstege (12), die eine geringere absolute Dickenabweichung der Schicht (36) bewirkt,
f) Veränderung der Fläche (42) der Verbindungsstege (12) auf Basis der bestimmten Zielflächengröße,
g) Wiederholen der Schritte a) bis d).

2. Verfahren nach Anspruch 1, **dadurch gekennzeichnet, dass** eine mittlere Stegbreite (44) verändert wird.

3. Verfahren nach Anspruch 1 oder 2, **dadurch gekennzeichnet, dass** die Schritte a) bis d) und e) bis f) in Anspruch 1 so oft wiederholt werden, bis eine absolute Dickenabweichung der Schicht weniger als 15 % beträgt.

4. Verfahren nach Anspruch 3, **dadurch gekennzeichnet, dass** die Schritte a) bis d) und e) bis f) in Anspruch 1 so oft wiederholt werden, bis die absolute Dickenabweichung der Schicht weniger als 10 % beträgt.

5. Verfahren nach einem der Ansprüche 1 bis 4, **dadurch gekennzeichnet, dass** die Veränderung der Fläche (42) der Verbindungsstege (12) mittels eines mechanischen Bearbeitungsverfahrens erfolgt.

6. Verfahren nach einem der Ansprüche 1 bis 5, **dadurch gekennzeichnet, dass** die Fläche (42) der Verbindungsstege (12) verkleinert wird, wenn die Dicke (38) der Schicht (36) zwischen zwei Verbindungsstegen (12) geringer ist als die höchste gemessene Dicke der Schicht.

7. Verfahren nach einem der Ansprüche 1 bis 6, **dadurch gekennzeichnet, dass** die Zielflächengröße mittels eines mathematischen Algorithmus oder durch Abrufen hinterlegter empirischen Daten ermittelt wird.

## Claims

1. Method for providing a printing screen (2) with a variety of area units, namely open areas (6) to allow a printing medium (8) to pass through and cover areas (10) to prevent the printing medium (8) from passing through, wherein the cover areas (10) are connected by way of at least two connecting webs (12) which have an area (42) in a perpendicular projection, comprising the following steps:
a) inserting a basic printing screen (30) into a screenprinting apparatus (4),
b) moving a doctor blade (32) along a doctor blade path (16) from a doctor blade starting area (18) to a doctor blade turning area (20) lying opposite thereto,
c) simultaneously printing a printing medium through the open areas (6) onto a substrate (34) in the form of a printed layer (36),
**characterised by**
d) measuring the resulting thickness (38) of the printed layer (36) at a number of measuring points (40),
e) ascertaining a target area size of the connecting webs (12) which results in a smaller absolute thickness deviation of the layer (36)
f) changing the area (42) of the connecting webs (12) on the basis of the target area size ascertained,
g) repeating steps a) to d).

2. Method according to claim 1, **characterised in that** an average web width (44) is changed.

3. Method according to claim 1 or 2, **characterised in that** steps a) to d) and e) to f) in claim 1 are repeated until an absolute thickness deviation of the layer is less than 15 %.

4. Method according to claim 3, **characterised in that** steps a) to d) and e) to f) in claim 1 are repeated until the absolute thickness deviation of the layer is less than 10 %.

5. Method according to one of claims 1 to 4, **characterised in that** the change to the area (42) of the connecting webs (12) is carried out by means of a mechanical processing method.

6. Method according to one of claims 1 to 5, **characterised in that** the area (42) of the connecting webs (12) is reduced when the thickness (38) of the layer (36) between two connecting webs (12) is less than the greatest measured thickness of the layer.

7. Method according to one of claims 1 to 6, **characterised in that** the target area size is determined by means of a mathematical algorithm or by calling up stored empirical data.

## Revendications

1. Procédé de mise à disposition d'un pochoir (2) d'impression ayant des unités de surface de type différent, à savoir des parties (6) ouvertes pour le passage d'un fluide (8) d'impression ainsi que des parties (10) de recouvrement pour empêcher le passage du fluide (8) d'impression, dans lequel les parties (10) de recouvrement sont reliées par au moins deux entretoises (12) de liaison, qui ont dans une projection verticale une surface (42), comprenant les stades suivants :
a) utilisation d'un pochoir (30) d'impression de base dans un dispositif (4) d'impression au pochoir,
b) déplacement d'une racle (32) le long d'un chemin (16) de déplacement de racle d'une partie (18) de début de raclage à une partie (20) d'inversion du raclage, se trouvant à l'opposé de celle-ci,
c) avec application par impression simultanée d'un fluide (8) d'impression par les parties (6) ouvertes sur un substrat (34) sous la forme d'une couche (36) imprimée,
**caractérisé par**
d) mesure de l'épaisseur (38) résultante de la couche (36) imprimée en plusieurs points (40) de mesure,
e) détermination d'une dimension de surfaces cibles des entretoises (12) de liaison qui provoque un écart d'épaisseur absolu le plus petit de la couche (36),
f) modification de la surface (42) des entretoises (12) de liaison sur la base de la dimension de surfaces cibles déterminée,
g) répétition des stades a) à d).

2. Procédé suivant la revendication 1, **caractérisé en ce que** l'on modifie une largeur (44) médiane des entretoises.

3. Procédé suivant la revendication 1 ou 2, **caractérisé en ce que** l'on répète les stades a) à d) et e) à f) de la revendication 1 jusqu'à obtenir un écart d'épaisseur absolu de la couche inférieur à 15 %.

4. Procédé suivant la revendication 3, **caractérisé en ce que** l'on répète les stades a) à d) et e) à f) de la revendication 1 jusqu'à obtenir un écart d'épaisseur absolu de la couche inférieur à 10 %.

5. Procédé suivant l'une des revendications 1 à 4, **caractérisé en ce que** la modification de la surface (42) des entretoises (12) de liaison s'effectue au moyen d'un procédé d'usinage mécanique.

6. Procédé suivant l'une des revendications 1 à 5, **caractérisé en ce que** l'on rapetisse la surface (42) des entretoises (12) de liaison, si l'épaisseur (38) de la couche (36) entre deux entretoises (12) de liaison est plus petite que l'épaisseur mesurée la plus grande de la couche.

7. Procédé suivant l'une des revendications 1 à 6, **caractérisé en ce que** l'on détermine la dimension de surfaces cibles au moyen d'un algorithme mathématique ou en faisant appel à des données empiriques mises en mémoire.
